# EUROPEAN PATENT SPECIFICATION

(11) **EP 2 869 161 B1**
(45) Date of publication and mention of the grant of the patent: **08.03.2017**
(21) Application number: 12880113.1
(22) Date of filing: 27.12.2012
(51) Int. Cl.: G06F 3/01, H04M 1/00, H04W 52/02

(54) **INFORMATION PROCESSING DEVICE AND METHOD OF CONTROLLING SAME, AND PROGRAM**
INFORMATIONSVERARBEITUNGSVORRICHTUNG UND VERFAHREN ZUR STEUERUNG DAVON SOWIE PROGRAMM
DISPOSITIF DE TRAITEMENT D'INFORMATIONS ET SON PROCÉDÉ DE COMMANDE, ET PROGRAMME

(30) Priority: 28.06.2012 JP 2012145209
(43) Date of publication of application: 06.05.2015
(60) Divisional application: 16172679.9
(73) Proprietor: NEC Corporation, Tokyo 108-8001 (JP)
(72) Inventor: TAMAOKI, Ryo, Kanagawa 211-8666 (JP)
(74) Representative: Vossius & Partner Patentanwälte Rechtsanwälte mbB
(86) International application number: PCT/JP2012/083887
(87) International publication number: WO 2014/002317

(56) References cited:
- JP-A- 2007 028 020
- JP-A- 2007 166 474
- JP-A- 2010 171 568
- US-A1- 2008 064 443
- US-A1- 2009 099 812
- US-A1- 2010 259 400
- US-B1- 8 170 621

## Description

### Technical Field

The present invention relates to an information processing device, control method thereof, and program.

### Background Art

In information processing devices such as mobile phones, and smart phones, operation input is generally performed via a touch panel or key buttons. Recently, in some information processing devices, an acceleration sensor for detecting the posture of the image processing device is provided so as to permit the user to perform operation input by changing the posture of the information processing device.

For example, JP2012-033997A (Patent Document 1) discloses a technique for performing control of switching the information processing device from a first operation mode to a second operation mode when the information processing device is placed in a predetermined posture.

Further, the article "Pictorially illustrated 'Optimus bright L-07C"', [Online], [Search on June 13, 2012], Internet <URL: http://www.itmedia.co.jp/mobile/articles/ 1145/24/news017.htm1> (Non-patent Document 1) discloses a technique wherein when the user changes the posture of the information processing device by shaking or tilting the information processing device, a specific control is performed in accordance with the change in posture. According to these techniques, the user can perform more intuitive operation input compared to that via a touch panel or key buttons.

US 2009/099812 A1 relates to a method and apparatus for utilizing acceleration data to identify an orientation of a mobile device.

US 8,170,621 B1 relates to a mobile device display management comprising techniques for managing the display of a mobile device during a voice communication session, e.g. during a phone call.

### Summary of the Invention

In the techniques disclosed in Patent Document 1 and Non-patent Document 1, the posture of the information processing device is used for operation control. In this case, to detect the posture of the information processing device, acceleration sensors, direction sensors and the like are used. In general, it is difficult to accurately detect difference in the posture of the information processing device by use of these sensors. Accordingly, if the operation of the information processing device is controlled based only on the posture of the information processing device, the number of the postures of the information processing device that can allocate control contents is limited, hence it is difficult to perform sensitive operation control.

The invention is as set out in the independent claims. The object is to provide an information processing device, a control method thereof and program that can perform more sensitive operation control in accordance with the posture of the information processing device.

In order to achieve the above object, the information processing device includes:
an input unit that receives input;
a detecting unit that detects the posture of the information processing device; and,
a control unit that controls the operation of the information processing device in accordance with the posture of the information processing device which the detecting unit detects after confirming the presence or absence of a particular input via the input unit.

In order to achieve the above object, the method of controlling an information processing device includes:
receiving input via an input unit;
detecting the posture of the information processing device; and,
controlling the operation of the information processing device in accordance with the detected posture of the information processing device after confirming the presence or absence of a particular input via the input unit.

In order to achieve the above object, the program causes a computer in an information processing device to execute:
a process of receiving input via an input unit;
a process of detecting the posture of the information processing device; and,
a process of controlling the operation of the information processing device in accordance with the detected posture of the information processing device after confirming the presence or absence of a particular input via the input unit.

According to the present invention, it is possible to perform operation control more sensitively in accordance with the posture of the information processing device.

### Brief Description of the Drawings

FIG. 1 is a block diagram showing the essential configuration of an information processing device of the first exemplary embodiment of the present invention.
FIG. 2 is a block diagram showing the essential configuration of an information processing device of the second exemplary embodiment of the present invention.
FIG. 3 is a flow chart showing the operation of the operation control unit shown in FIG. 2.

### Exemplary Embodiments

Exemplary embodiments for carrying out the present invention are next described with reference to the accompanying drawings.

### (First Exemplary Embodiment)

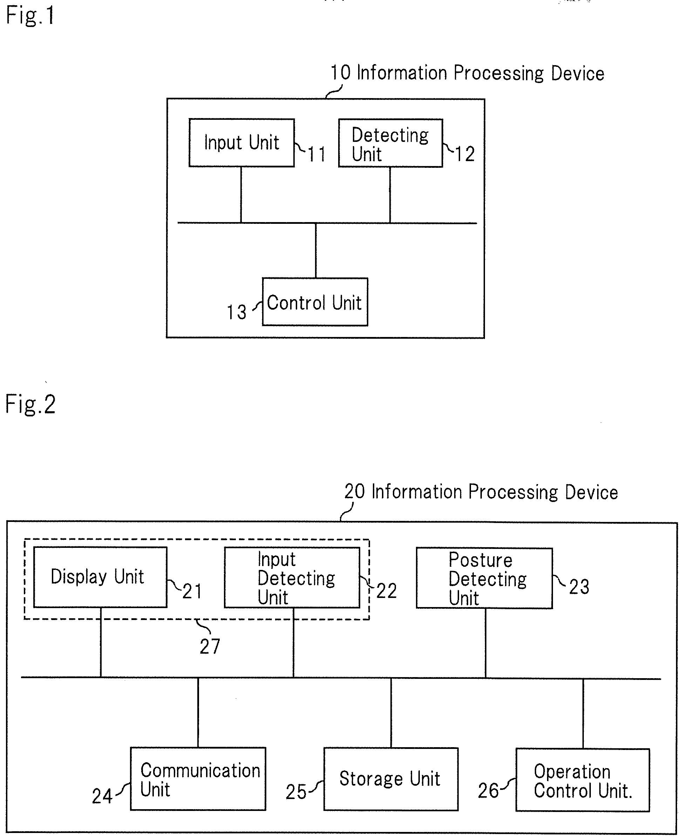

FIG. 1 is a block diagram showing the essential configuration of information processing device 10 of the first exemplary embodiment of the present invention. Here, specific examples of the information processing device according to the present invention may include mobile phones, smart phones, tablet PC (Personal Computer), notebook PC and PDA (Personal Data Assistant).

Information processing device 10 shown in FIG. 1 includes input unit 11, detecting unit 12 and control unit 13.

Input unit 11 receives input from the user. Here, specific examples of input unit 11 may include key buttons, and a touch panel that detects touch of input means such as fingers, a stylus pen, etc. and outputs a signal based on the position that the input means touches.

When input unit 11 is a touch panel, input unit 11 is composed of a display unit and a touch sensor laid over the display unit, not illustrated in FIG. 1. In this case, an operation image that shows operation content is displayed on the display unit. As the input means is touched in accordance with the display of the operation image, the touch sensor outputs a signal corresponding to the position at which the input means has touched, so that the operation content displayed at the position indicated by the signal is accepted as an input.

Here, if the touch sensor is one that detects touch of the input means from the change of the capacitance, it is also possible to detect the approach of the input means by adjusting the detection sensitivity of the change of the capacitance or the threshold of the change of the capacitance for determining the presence or absence of contact.

Detecting unit 12 detects the posture of information processing device 10 using acceleration sensors, direction sensors and others.

Control unit 13 controls the operation of information processing device 10 in accordance with the posture of information processing device 10 detected by detecting unit 12.

Next, the operation of information processing device 10 will be described focusing on the operation of control unit 13.

Control unit 13 controls the operation of information processing device 10 in accordance with the posture of information processing device 10 detected by detecting unit 12 within a predetermined period of time after confirmation of whether or not a particular input was made via input unit 11.

For example, in a case where a predetermined application is being executed, when information processing device 10 detected by detecting unit 12 is placed in a particular posture after a quit command of the application has been input as the particular input, control unit 13 terminates the application and displays the image that corresponds to execution of other applications. On the other hand, when information processing device 10 detected by detecting unit 12 is placed in a particular posture without any input of the quit command of the application, control unit 13 terminates the application and goes into sleep mode in which display of the display unit is turned off.

In this way, according to the present exemplary embodiment, information processing device 10 controls the operation of information processing device 10 in accordance with the posture of information processing device 10 which detecting unit 12 detects after confirming the presence or absence of a particular input via input unit 11.

The operation control of information processing device 10 based on the presence or absence of a particular input via input unit 11 and the posture of information processing device 10 after confirming the presence or absence of the particular input, makes it possible to perform more sensitive operation control in accordance with the posture of information processing device 10 than that when the operation control is performed based only on the posture of information processing device 10.

### (The Second Exemplary Embodiment)

FIG. 2 is a block diagram showing the essential configuration of information processing device 20 of the second exemplary embodiment of the present invention.

Information processing device 20 shown in FIG. 2 includes display unit 21, input detecting unit 22, posture detecting unit 23, communication unit 24, storage unit 25 and operation control unit 26.

Display unit 21, following the control of operation control unit 26, displays various images. Herein, display unit 21 is one example of the notifying unit.

Input detecting unit 22 is a touch sensor that detects touch of input means such as fingers, a stylus pen, etc. and outputs a signal based on the position that the input means touches. Input detecting unit 22 is laid over display unit 21 so as to form a touch panel as input unit 27. Input unit 27 corresponds to input unit 11 in the first exemplary embodiment. Here, the touch sensor, not only detects touch of the input means but also detect its approach.

Posture detecting unit 23 detects the posture of information processing device 20 using acceleration sensors, direction sensors and others. Posture detecting unit 23 corresponds to detecting unit 12 in the first exemplary embodiment.

Communication unit 24 can be connected to a plurality of communication networks such as 3G line networks, LTE (Long Term Evolution) line networks, Wi-Fi communication networks, and Internet communication networks, and connects to any one of communication networks among the plurality of available communication networks, following the control of operation control unit 26.

As operation control unit 26 executes an application, storage unit 25 stores information on the usage status of the application in accordance with execution of the application. Operation control unit 26 can execute various kinds of applications, such as a phone calling application for phone call, web page browsing application for browsing web pages, and photograph browsing application for viewing photograph. For example, when a phone calling application is executed, storage unit 25 stores information on the opposite party, date and time of the phone call and others as information relating to the usage status of the application. Further, when a web page browsing application is executed, storage unit 25 stores URLs (Uniform Resource Locator) of browsed web pages and the like as information relating to the usage status of the application. When a photography browsing application is executed, storage unit 25 stores information that indicates the browsed photographs and the like as the information relating to the usage status of the application. The information relating to the usage statues of applications stored in storage unit 25 is notified to the user by display on display unit 21 or by any other means.

Operation control unit 26 executes an application in accordance with the input via input unit 27 and makes display unit 21 display images in accordance with the execution of the application. The operation control unit 26 also controls the operation of information processing device 20 in accordance with the posture of information processing device 20, which posture detecting unit 23 detects after confirming whether or not a particular input has been made via input unit 27. Operation control unit 26 is one example of control unit 13 in the first exemplary embodiment.

Next, the operation of information processing device 20 of the present exemplary embodiment will be described focusing on the operation of operation control unit 26.

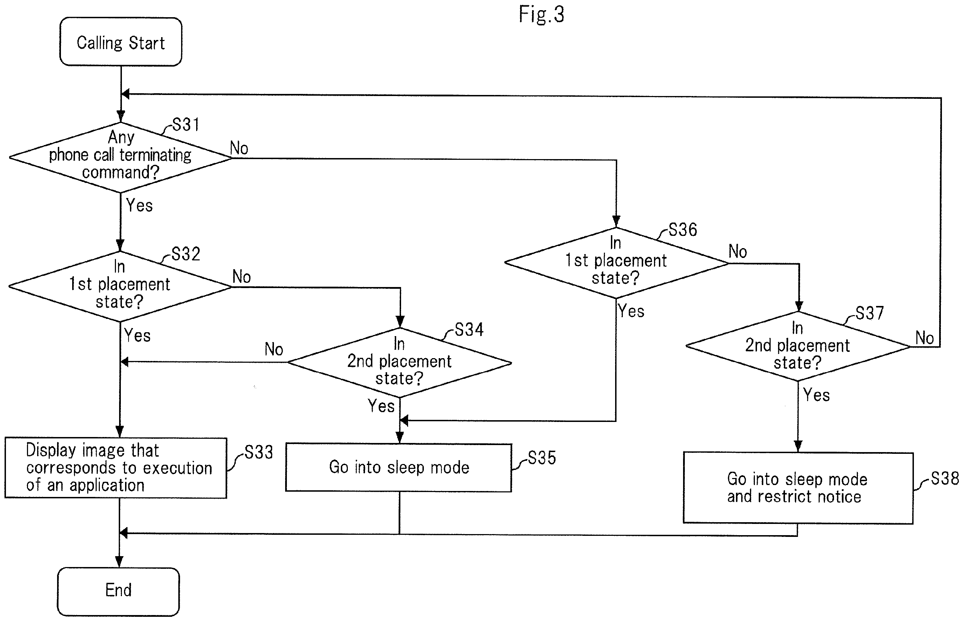

FIG. 3 is a flow chart showing the operation of control unit 26.

In the description hereinbelow, the state in which information processing device 20 is placed with display unit 21 vertically oriented upward is called the first placement state whereas the state in which information processing device 20 is placed with display unit 21 vertically oriented downward is called the second placement state.

Also it is assumed hereinbelow that operation control unit 26 has been directed to perform a phone call and executes a phone calling application. Storage unit 25 stores the opposite parties and date and time of the phone call as information relating to the usage status of the phone calling application.

In the phone calling state, operation control unit 26 periodically determines whether or not a phone call terminating command that indicates that the phone call has ended has been input via input unit 27 (Step S31).

When the phone call terminating command has been input (Step S31: Yes), operation control unit 26 determines whether or not the posture of information processing device 20 detected by posture detecting unit 23 within a predetermined period time after the input of the phone call terminating command is in the first placement state (Step S32).

When the posture of information processing device 20 is in the first placement state (Step S32: Yes), it can be considered that the user has put information processing device 20 on a desk or the like with display unit 21 vertically oriented upward after the end of the phone call. In such a situation, it is expected that the user will use another application next. Therefore, operation control unit 26 ends the telephone calling application and displays an image that corresponds to the execution of other applications on display unit 21 (Step S33).

When the posture of information processing device 20 is not in the first placement state (Step S32: No), operation control unit 26 determines whether or not the posture of information processing device 20 detected by posture detecting unit 23 is in the second placement state (Step S34).

When the posture of information processing device 20 is not in the second placement state (Step S34: No), it can be considered that the user will hold information processing device 20 and use another application after the end of the phone call. Accordingly, operation control unit 26 enters the process at Step S33 to display an image that corresponds to the execution of the application on display unit 21.

When the posture of information processing device 20 is in the second placement state (Step S34: Yes), it can be considered that the user has put information processing device 20 on a desk or the like with display unit 21 vertically oriented downward after the end of the phone call. In such a situation, it is unlikely to expect that the user will use another application next. Therefore, operation control unit 26 ends the telephone calling application and turns off display of display unit 21 and goes into sleep mode (Step S35).

When the phone call terminating command has not been input (Step S31: No), operation control unit 26 determines whether or not the posture of information processing device 20 detected by posture detecting unit 23 is in the first placement state (Step S36).

When the posture of information processing device 20 is in the first placement state (Step S36: Yes), it can be considered that in order to promptly terminate phone call, the user has put information processing device 20 on the desk or the like with display unit 21 vertically oriented upward from the state in which the user held information processing device 20 for phone call. Accordingly, operation control unit 26 enters the process at Step S35 to terminate the telephone calling application and turns off display of display unit 21 and goes into sleep mode.

When the posture of information processing device 20 is not in the first placement state (Step S36: No), operation control unit 26 determines whether or not the posture of information processing device 20 detected by posture detecting unit 23 is in the second placement state (Step S37).

When the posture of information processing device 20 is in the second placement state (Step S37: Yes), operation control unit 26 terminates the telephone calling application and turns off display of display unit 21 to go into sleep mode. Further, operation control unit 26 restricts notice of the information relating to the usage status of the telephone calling application stored in storage unit 25 as a result of the usage of the telephone calling application at this time (Step S38). Accordingly, operation control unit 26, if requested to provide notification of the information relating to the usage status of the telephone calling application, restricts display of the information relating to the usage status of the telephone calling application, on display unit 21 unless, for example a predetermined password or the like is entered.

When information processing device 20 is put in the second placement state without receiving a phone call terminating command, it is considered that the user has put information processing device 20 with display unit 21 vertically oriented downward from the state in which the user held information processing device 20 for phone call in order to promptly terminate the phone call and prevent display of display unit 21 from being seen by a third person. Accordingly, operation control unit 26 terminates the telephone calling application and goes into sleep mode, and at the same time, restricts notice of the information relating to the usage status of the telephone calling application at this time.

When the posture of information processing device 20 is not in the second placement state (Step S37: No), operation control unit 26 returns to the process at Step S31.

The description with FIG. 3 has been made by giving an example where a different operation control is performed depending on the determined placement state, by determining whether the posture of information processing device 20 is in either the first state or the second placement state. However, three or more placement states of information processing device 20 may be introduced to perform different operation controls.

Further, although the description with FIG. 3 has been made by giving an example where a telephone calling application is used, the present invention can be applied to case where a web page browsing application is used and other cases. In the case where a web page browsing application is used, URL of browsed web pages are stored in storage unit 25 as information relating to the usage status of the web application. In this case, notice of the information relating to the usage status of the web application can be restricted when information processing device 20 is placed in a predetermined posture during the usage of the web page browsing application.

Further, though the description with FIG. 3 has been described by giving an example where notice of the information relating to the usage status of the application is restricted, a configuration is also provided in which the information relating to the usage status of the application is deleted from storage unit 25.

In this way, according to the present exemplary embodiment, information processing device 20 controls the operation of information processing device 20 in accordance with the posture of information processing device 20 which posture detecting unit 23 detects after confirming the presence or absence of a particular input.

The operation control of information processing device 20 based on the presence or absence of a particular input and the posture of information processing device 20 after confirming the presence or absence of the particular input, makes it possible to perform more sensitive operation control in accordance with the posture of information processing device 20 than that when the operation control is performed based only on the posture of information processing device 20.

Here, though the present exemplary embodiment has been described by providing an example where notice is given by displaying the information relating to the usage status of the application stored in storage unit 25, on display unit 21, notice may be given by, for example, voice output using a speaker or the like.

Further, though the present exemplary embodiment has been described by giving an example where notice of the information relating to the usage status of the application is restricted, the present invention can also be applied to, for example, simplifying the input of settings required to execute applications.

As described above, communication unit 24 can be connected to a plurality of communication networks such as mobile phone networks, Wi-Fi communication networks and Internet communication networks. Now, it is assumed hereinbelow that the use fee for mobile phone networks are more expensive and have a lower communication rate than the Internet communication networks.

It is also assumed hereinbelow that as the telephone calls using information processing device 20, phone call using telephone numbers corresponding to mobile phone networks and phone call using IP (Internet Protocol) via the Internet communication networks, are permitted.

It is also assumed hereinbelow that information processing device 20 performs communication via the mobile phone network or via the Internet communication networks in order to update diverse functions of its own device or to automatically update the information stored on its own device.

Herein, if automatic updating is performed using the mobile phone network, the use charge may become prohibitive. To deal with, the user may set up the information processing device such that it will use the Internet communication network as the ordinary connection and will connect to the mobile phone network only for cases where the mobile phone network has to be used, for example, when a phone call using a telephone number corresponding to the mobile phone network is made. However such setting is troublesome for the user.

To avoid this, operation control unit 26 may be adapted to make communication unit 24 cut off connection with the mobile phone network and set up connection with the Internet communication networks from this point forwards when, for example a phone call terminating command is input during a phone call via the mobile phone network and when the posture of information processing device 20 is set in the second placement state. This arrangement causes the Internet networks to perform updating without it being necessary for the user to adjust any settings.

As a result, the user is able to use the mobile phone network that would be cost prohibitive only when making phone calls using telephone numbers corresponding to the mobile phone network and can use the Internet communication network that is available at low price or a fixed price, for communications other than the phone calls using telephone numbers corresponding to the mobile phone network, by terminating the phone call by setting information processing device 20 at the posture of the second placement state, without performing connection settings.

The method that is carried out in the information processing device of the present invention may be applied to a program that is executed by a computer. In addition, this program can be stored on a recording medium, and further, can be provided to the outside by way of a network.

Although the invention of the present application has been described with reference to exemplary embodiments, the present invention is not limited to the above-described exemplary embodiments. The configuration and details of the invention of the present application are open to various modifications within the scope of the invention of the present application that will be clear to one of ordinary skill in the art.

The present application claims priority based on Japanese Patent Application No. 2012-145209, filed on June 28, 2012.

## Claims

1. An information processing device (10, 20) comprising:
an input unit (11, 27) adapted to receive input;
a detecting unit (12, 23) adapted to detect a posture of said information processing device (10, 20);
a control unit (13, 26) adapted to control an operation of said information processing device (10, 20) in accordance with the posture of said information processing device (10, 20) which said detecting unit (12, 23) is further adapted to detect after confirming the presence or absence of a particular input via said input unit (11, 27); and
a display unit (21),
wherein during an execution of an application according to an input via said input unit (11, 27), if the posture of said information processing device (10, 20), which said detecting unit (12, 23) detects after input of a command to terminate the application via said input unit (11, 27), is changed to a predetermined posture, said control unit (13, 26) is adapted to terminate the application and to cause said display unit (21) to display an image that corresponds to the execution of other applications, whereas if the posture of said information processing device (10, 20) which said detecting unit (12, 23) detects is changed to the predetermined posture without receiving any input command to terminate the application, said control unit (13, 26) is adapted to terminate the application and to turn off said display unit (21).

2. The information processing device (10, 20) according to Claim 1, wherein said control unit (13, 26), after confirming the presence or absence of a particular input via said input unit (11, 27), is adapted to determine, from among a plurality of predetermined postures, the posture that corresponds to posture of said information processing device (10, 20) detected by said detecting unit (12, 23), and to control the operation of said information processing device (10, 20) in a different mode in accordance with the posture of said information processing device (10, 20) which said detecting unit (12, 23) has detected from the predetermined plural postures.

3. The information processing device (10, 20) according to Claim 1 or 2, wherein said control unit (13, 26) is adapted to control the operation of said information processing device (10, 20) in accordance with the posture of said information processing device (10, 20) which said detecting unit (12, 23) detects within a predetermined period of time after confirming the presence or absence of a particular input via said input unit (11, 27).

4. The information processing device (10, 20) according to Claim 1, further comprising a communication unit that can be connected to a plurality of communication networks, wherein
during an execution of an application in connection with any one of the plurality of communication networks via said communication unit, if the posture of said information processing device (10, 20) which said detecting unit (12, 23) detects is changed to a predetermined posture without receiving any input command to terminate the application via said input unit (11, 27), said control unit (13, 26) is adapted to make said communication unit cut off connection with the communication network, and to set up a communication network previously determined among the plurality of communication networks, as the communication network to which a connection is connected.

5. A control method of an information processing device (10, 20) comprising:
receiving input via an input unit (11, 27);
detecting the posture of said information processing device (10, 20); ,
controlling the operation of said information processing device (10, 20) in accordance with the detected posture of said information processing device (10, 20) after confirming the presence or absence of a particular input via said input unit (11, 27); and
during an execution of an application according to an input via said input unit (11, 27), if the posture of said information processing device (10, 20) which is detected after input of a command to terminate the application via said input unit (11, 27) is changed to a predetermined posture, terminating the application and causing a display unit (21) to display an image that corresponds to the execution of other applications, whereas if the posture of said information processing device (10, 20) which is detected, is changed to the predetermined posture without receiving any input command to terminate the application, terminating the application and turning off said display unit (21).

6. A program for causing a computer in an information processing device (10, 20) to execute:
a process of receiving input via an input unit (11, 27);
a process of detecting the posture of said information processing device (10, 20);
a process of controlling the operation of said information processing device (10, 20) in accordance with the detected posture of said information processing device (10, 20) after confirming the presence or absence of a particular input via said input unit (11, 27); and
a process of, during an execution of an application according to an input via said input unit (11, 27), if the posture of said information processing device (10, 20) which is detected after input of a command to terminate the application via said input unit (11, 27) is changed to a predetermined posture, terminating the application and causing a display unit (21) to display an image that corresponds to the execution of other applications, whereas if the posture of said information processing device (10, 20) which is detected, is changed to the predetermined posture without receiving any input command to terminate the application, terminating the application and turning off said display unit (21).

## Patentansprüche

1. Informationsverarbeitungsvorrichtung (10, 20) mit:
einer Eingabeeinrichtung (11, 27) zum Empfangen einer Eingabe;
einer Erfassungseinrichtung (12,23) zum Erfassen einer Haltung der Informationsverarbeitungsvorrichtung (10, 20);
einer Steuereinrichtung (13,26) zur Steuerung eines Betriebs der Informationsverarbeitungsvorrichtung (10,20) gemäß der Haltung der Informationsverarbeitungsvorrichtung (10,20), zu dessen Erfassung die Erfassungseinrichtung (12, 23) ferner eingerichtet ist, wenn die An- oder Abwesenheit einer bestimmten Eingabe durch die Eingabeeinrichtung (11, 27) bestätigt wird, und
eine Anzeigeeinrichtung (21),
wobei die Steuereinrichtung (13, 26) während der Ausführung einer Anwendung gemäß einer Eingabe durch die Eingabeeinrichtung (11,27), wenn die Haltung der Informationsverarbeitungsvorrichtung (10,20), den die Erfassungseinrichtung (12, 23) nach Eingabe eines Befehls zum Beenden der Anwendung durch die Eingabeeinrichtung (11,27) erfasst, in eine bestimmte Haltung geändert wird, eingerichtet ist, die Anwendung zu beenden und die Anzeigeeinrichtung (21) zu veranlassen, ein Bild anzuzeigen, das der Ausführung anderer Anwendungen entspricht, wohingegen die Steuereinrichtung (13, 26), wenn die Haltung der Informationsverarbeitungsvorrichtung (10,20), den die Erfassungseinrichtung (12, 23) erfasst, ohne Empfang eines Eingabebefehls zum Beenden der Anwendung in die bestimmte Haltung geändert wird, eingerichtet ist, die Anwendung zu beenden und die Anzeigeeinrichtung (21) abzuschalten.

2. Informationsverarbeitungsvorrichtung (10, 20) nach Anspruch 1, wobei die Steuereinrichtung (13, 26) nach Bestätigung der An- oder Abwesenheit einer bestimmten Eingabe durch die Eingabeeinrichtung (11, 27) eingerichtet ist, aus einer Vielzahl von bestimmten Haltungen die Haltung zu bestimmen, der der durch die Erfassungseinrichtung (12, 23) erfassten Haltung der Informationsverarbeitungsvorrichtung (10, 20) entspricht, und den Betrieb der Informationsverarbeitungsvorrichtung (10, 20) in einem anderen Modus gemäß der Haltung der Informationsverarbeitungsvorrichtung (10, 20), den die Erfassungseinrichtung (12, 23) aus der Vielzahl von bestimmten Haltungen erfasst hat, zu steuern.

3. Informationsverarbeitungsvorrichtung (10,20) nach Anspruch 1 oder 2, wobei die Steuereinrichtung (13,26) eingerichtet ist, den Betrieb der Informationsverarbeitungsvorrichtung (10,20) gemäß der Haltung der Informationsverarbeitungsvorrichtung (10,20), den die Erfassungseinrichtung (12,23) innerhalb eines bestimmten Zeitraums nach der Bestätigung der An- oder Abwesenheit einer bestimmten Eingabe durch die Eingabeeinrichtung (11, 27) erfasst, zu steuern.

4. Informationsverarbeitungsvorrichtung (10, 20) nach Anspruch 1, ferner mit einer Kommunikationseinrichtung, die mit einer Vielzahl von Kommunikationsnetzwerken verbunden werden kann, wobei die Steuereinrichtung (13, 26) während einer Ausführung einer Anwendung in Verbindung mit einer der Vielzahl von Kommunikationsnetzwerken durch die Kommunikationseinrichtung, wenn die Haltung der Informationsverarbeitungsvorrichtung (10, 20), den die Erfassungseinrichtung (12, 23) erfasst, ohne Empfang eines Eingabebefehls zum Beenden der Anwendung durch die Eingabeeinrichtung (11, 27) in eine bestimmte Haltung geändert wird, eingerichtet ist, die Kommunikationseinrichtung zu veranlassen, die Verbindung mit dem Kommunikationsnetzwerk zu beenden, und ein Kommunikationsnetzwerk, das vorher aus der Vielzahl von Kommunikationsnetzwerken bestimmt wurde, als das Kommunikationsnetzwerk eingerichtet wird, mit dem eine Verbindung hergestellt wird.

5. Verfahren zur Steuerung einer Informationsverarbeitungsvorrichtung (10, 20), mit:
Empfangen einer Eingabe durch eine Eingabeeinrichtung (11, 27),
Erfassen der Haltung der Informationsverarbeitungsvorrichtung (10, 20),
Steuern des Betriebs der Informationsverarbeitungsvorrichtung (10, 20) gemäß der erfassten Haltung der Informationsverarbeitungsvorrichtung (10, 20) nach Bestätigung der An- oder Abwesenheit einer bestimmten Eingabe durch die Eingabeeinrichtung (11, 27) und
während einer Ausführung einer Anwendung gemäß einer Eingabe durch die Eingabeeinrichtung (11,27), wenn die Haltung der Informationsverarbeitungsvorrichtung (10, 20), der nach Eingabe eines Befehls zum Beenden der Anwendung durch die Eingabeeinrichtung (11,27) erfasst wird, in eine bestimmte Haltung geändert wird, Beenden der Anwendung und Veranlassen einer Anzeigeeinrichtung (21), ein Bild anzuzeigen, das der Ausführung anderer Anwendungen entspricht, und stattdessen, wenn die Haltung der Informationsverarbeitungsvorrichtung (10, 20), der erfasst wird, ohne Empfang eines Eingabebefehls zum Beenden der Anwendung in die bestimmte Haltung geändert wird, Beenden der Anwendung und Abschalten der Anzeigeeinrichtung (21).

6. Programm, das einen Computer in einer Informationsverarbeitungsvorrichtung (10, 20) veranlasst auszuführen:
ein Verfahren zum Empfangen einer Eingabe durch eine Eingabeeinrichtung (11, 27),
ein Verfahren zum Erfassen der Haltung der Informationsverarbeitungsvorrichtung (10, 20),
ein Verfahren zum Steuern des Betriebs der Informationsverarbeitungsvorrichtung (10, 20) gemäß der erfassten Haltung der Informationsverarbeitungsvorrichtung (10, 20) nach Bestätigung der An- oder Abwesenheit einer bestimmten Eingabe durch die Eingabeeinheit (11, 27) und
während einer Ausführung einer Anwendung gemäß einer Eingabe durch die Eingabeeinrichtung (11,27), wenn die Haltung der Informationsverarbeitungsvorrichtung (10, 20), der nach Eingabe eines Befehls zum Beenden der Anwendung durch die Eingabeeinrichtung (11,27) erfasst wird, in eine bestimmte Haltung geändert wird, Verfahren zum Beenden der Anwendung und Veranlassen einer Anzeigeeinrichtung (21), ein Bild anzuzeigen, das der Ausführung anderer Anwendungen entspricht, und stattdessen, wenn die Haltung der Informationsverarbeitungsvorrichtung (10, 20), der erfasst wird, ohne Empfang eines Eingabebefehls zum Beenden der Anwendung in die bestimmte Haltung geändert wird, Verfahren zum Beenden der Anwendung und Abschalten der Anzeigeeinrichtung (21).

## Revendications

1. Dispositif de traitement d'informations (10, 20) comprenant :
une unité d'entrée (11, 27) adaptée pour recevoir une entrée ;
une unité de détection (12, 23) adaptée pour détecter une posture dudit dispositif de traitement d'informations (10, 20) ;
une unité de commande (13, 26) adaptée pour commander un fonctionnement dudit dispositif de traitement d'informations (10, 20) conformément à la posture dudit dispositif de traitement d'informations (10, 20) que ladite unité de détection (12, 23) est en outre adaptée pour détecter après confirmation de la présence ou de l'absence d'une entrée particulière via ladite unité d'entrée (11, 27) ; et
une unité d'affichage (21),
dans lequel pendant une exécution d'une application selon une entrée via ladite unité d'entrée (11, 27), si la posture dudit dispositif de traitement d'informations (10, 20) que ladite unité de détection (12, 23) détecte après entrée d'un ordre pour mettre fin à l'application via ladite unité d'entrée (11, 27), est modifiée en une posture prédéterminée, ladite unité de commande (13, 26) est adaptée pour mettre fin à l'application et pour amener ladite unité d'affichage (21) à afficher une image qui correspond à l'exécution d'autres applications, tandis que si la posture dudit dispositif de traitement d'informations (10, 20), que ladite unité de détection (12, 23) détecte est modifiée en la posture prédéterminée sans recevoir d'ordre d'entrée pour mettre fin à l'application, ladite unité de commande (13, 26) est adaptée pour mettre fin à l'application et éteindre ladite unité d'affichage (21).

2. Dispositif de traitement d'informations (10, 20) selon la revendication 1, dans lequel ladite unité de commande (13, 26), après confirmation de la présence ou de l'absence d'une entrée particulière via ladite unité d'entrée (11, 27), est adaptée pour déterminer, parmi une pluralité de postures prédéterminées, la posture qui correspond à la posture dudit dispositif de traitement d'informations (10, 20) détectée par ladite unité de détection (12, 23), et pour commander le fonctionnement dudit dispositif de traitement d'informations (10, 20) dans un mode différent conformément à la posture dudit dispositif de traitement d'informations (10, 20) que ladite unité de détection (12, 23) a détectée à partir de la pluralité de postures prédéterminées.

3. Dispositif de traitement d'informations (10, 20) selon la revendication 1 ou 2, dans lequel ladite unité de commande (13, 26) est adaptée pour commander le fonctionnement dudit dispositif de traitement d'informations (10, 20) conformément à la posture dudit dispositif de traitement d'informations (10, 20) que ladite unité de détection (12, 23) détecte dans une période prédéterminée après confirmation de la présence ou de l'absence d'une entrée particulière via ladite unité d'entrée (11, 27).

4. Dispositif de traitement d'informations (10, 20) selon la revendication 1, comprenant en outre une unité de communication qui peut être connectée à une pluralité de réseaux de communication, dans lequel
pendant une exécution d'une application en connexion avec l'un quelconque de la pluralité de réseaux de communication via ladite unité de communication, si la posture dudit dispositif de traitement d'informations (10, 20) que ladite unité de détection (12, 23) détecte est modifiée en une posture prédéterminée sans recevoir d'ordre d'entrée pour mettre fin à l'application via ladite unité d'entrée (11, 27), ladite unité de commande (13, 26) est adaptée pour amener ladite unité de communication à couper une connexion avec le réseau de communication, et pour instaurer un réseau de communication précédemment déterminé parmi la pluralité de réseaux de communication comme le réseau de communication auquel une connexion est connectée.

5. Procédé de commande d'un dispositif de traitement d'informations (10, 20) comprenant :
la réception d'une entrée via une unité d'entrée (11, 27) ;
la détection de la posture dudit dispositif de traitement d'informations (10, 20) ;
la commande du fonctionnement dudit dispositif de traitement d'informations (10, 20) conformément à la posture détectée dudit dispositif de traitement d'informations (10, 20) après confirmation de la présence ou de l'absence d'une entrée particulière via ladite unité d'entrée (11, 27) ; et
pendant l'exécution d'une application selon une entrée via ladite unité d'entrée (11, 27), si la posture dudit dispositif de traitement d'informations (10, 20) qui est détectée après entrée d'un ordre pour mettre fin à l'application via ladite unité d'entrée (11, 27) est modifiée en une posture prédéterminée, la fin de l'application et le fait d'amener une unité d'affichage (21) à afficher une image qui correspond à l'exécution d'autres applications, tandis que si la posture dudit dispositif de traitement d'informations (10, 20) qui est détectée, est modifiée en la posture prédéterminée sans recevoir d'ordre d'entrée pour mettre fin à l'application, la fin de l'application et l'arrêt de ladite unité d'affichage (21).

6. Programme pour amener un ordinateur dans un dispositif de traitement d'informations (10, 20) à exécuteur :
un processus de réception d'une entrée via une unité d'entrée (11, 27) ;
un processus de détection de la posture dudit dispositif de traitement d'informations (10, 20) ;
un processus de commande du fonctionnement dudit dispositif de traitement d'informations (10, 20) conformément à la posture détectée dudit dispositif de traitement d'informations (10, 20) après confirmation de la présence ou de l'absence d'une entrée particulière via ladite unité d'entrée (11, 27) ; et
un processus, pendant une exécution d'une application selon une entrée via ladite unité d'entrée (11, 27), si la posture dudit dispositif de traitement d'informations (10, 20) qui est détectée après une entrée d'un ordre pour mettre fin à l'application via ladite unité d'entrée (11, 27) est modifiée en une posture prédéterminée, de fin de l'application et d'amenée d'une unité d'affichage (21) à afficher une image qui correspond à l'exécution d'autres applications, tandis que si la posture dudit dispositif de traitement d'informations (10, 20) qui est détectée, est modifiée en la posture prédéterminée sans recevoir d'ordre d'entrée pour mettre fin à l'application, de fin de l'application et d'arrêt de ladite unité d'affichage (21).
